# EUROPEAN PATENT SPECIFICATION

(11) **EP 2 729 014 B1**
(45) Date of publication and mention of the grant of the patent: **05.10.2016**
(21) Application number: 12735175.7
(22) Date of filing: 26.06.2012
(51) Int. Cl.: A23G 1/42, A23G 3/36, A23G 9/36, A23L 27/00, A23L 27/20

(54) **BITTERNESS MASKING**
MASKIERUNG VON BITTEREM GESCHMACK
MASQUAGE D'AMERTUME

(30) Priority: 05.07.2011 US 201161504476 P
(43) Date of publication of application: 14.05.2014
(73) Proprietor: Kraft Foods R & D, Inc., Deerfield, IL 60015 (US)
(72) Inventor: FIRRELL, Michelle, Reading Berkshire RG6 4HN (GB); MARSHALL, Sarah, West Berkshire RG14 2FB (GB); LUNDY, Steffi, Belfast BT4 2AD (IE); NORTON, Clive RT, Bedminster, NJ 07921 (US)
(74) Representative: Wilson Gunn
(86) International application number: PCT/US2012/044151
(87) International publication number: WO 2013/006305

(56) References cited:
- JP-A- 2004 018 829
- JP-A- 2011 055 777
- DATABASE GNPD [Online] MINTEL; March 1999 (1999-03), ANONYMUS: "Pfefferminz Plus", XP002684401, Database accession no. 3120
- DATABASE GNPD [Online] MINTEL; April 2011 (2011-04), ANONYMUS: "Premium Assorted Chocolates", XP002684402, Database accession no. 1537448

## Description

### FIELD

This disclosure generally relates to methods for masking the unpleasant taste of a bitter tasting substance particularly in confectionery compositions containing the bitter tasting substance. In particular, this disclosure relates to masking the unpleasant taste of a bitter tasting substance in confectionery compositions that include the bitter tasting substance and a fat using a vitamin E compound.

### BACKGROUND

Vitamin E is a fat-soluble vitamin naturally found in many types of foods, fats and oils. There are eight known chemical forms of Vitamin E. These chemical forms include four tocopherols (alpha-, beta-, gamma- and delta-tocopherol) and four tocotrienols (alpha-, beta-, gamma- and delta-tocotrienol). Tocopherols are naturally found in vegetable oils, nuts, seeds, and whole grains. Tocotrienols are naturally found in very low levels in select vegetable oils, plam oil, wheat germ, barley, saw palmetto, and certain types of nuts and grains.

Vitamin E is a known antioxidant that stops the production of reactive oxygen species formed when fat undergoes oxidation. Vitamin E is often incorporated as an antioxidant into oil or fat-containing food products to minimize deterioration that may occur through oxidation during storage. Confectionery compositions, such as chewing gum, have also been described containing a mixture of tocopherols to stabilize the mint oils included in the chewing gum (US 5,200,214).

Document JP 2004-018829 discloses a bitter taste inhibitor for mint flavour, such as menthol, which contains an edible fat and oil as effective component.

Document JP 2011-055777 discloses a method for relieving pain associated with menthol by addition of tocopherol in menthol-containing food products.

Menthol is known for its physiological cooling effect on the skin and mucous membranes of the mouth and has been extensively used as a flavoring agent in a wide variety of products, particularly foodstuffs, beverages, dentrifrices, mouthwashes, etc. Many confectionery products are mint-flavored products that contain moderate to high levels of menthol. The disadvantages of using menthol, however, are its strong minty odor and the harsh notes it imparts to compositions in which it is found. Confectionery products containing menthol can have a bitter or unpleasant off-note taste that adversely affects the overall flavor of the product. In many instances, the flavor of confectionery products containing menthol would be improved by diminishing or removing the bitter or unpleasant off-note tastes while simultaneously preserving or enhancing the contribution made to the overall flavor by the menthol component.

### SUMMARY

In one embodiment, a method is provided for masking the unpleasant taste of a bitter tasting substance, the method comprising administering the bitter tasting substance with a tocopherol in the presence of at least one fat.

In another embodiment, a method is provided for masking a bitter taste in a confectionery composition, the method comprising providing a confectionery composition comprising a bitter tasting substance, at least one fat and a taste-masking effective amount of a tocopherol.

In yet another embodiment, a confectionery composition comprises a bitter tasting substance, a fat, and a tocopherol, wherein the unpleasant taste of the bitter tasting substance is masked.

In one embodiment, the use of tocopherol to modify, mask or reduce the unpleasant taste impression of a bitter-tasting substance in a fat-containing confectionery composition is provided.

The above described and other features are exemplified by the following detailed description.

### DETAILED DESCRIPTION

It has been found that the administration of small amounts of a vitamin E compound with a bitter tasting substance effectively masks or reduces the unpleasant and/or bitter taste of the bitter tasting substance. The effect of the vitamin E compound on the overall taste profile of the bitter tasting substance is particularly effective when administered in the presence of at least one fat.

Disclosed herein are methods of masking the unpleasant taste of a bitter tasting substance. The method includes administering the bitter tasting substance with a vitamin E compound in the presence of at least one fat.

Also disclosed herein is a method for masking a bitter taste in a confectionery composition containing a bitter tasting substance. The method includes providing a confectionery composition comprising a bitter tasting substance, at least one fat and a taste-masking effective amount of a vitamin E compound.

Disclosed herein also are confectionery compositions including a bitter tasting substance, at least one fat, and a taste-masking effective amount of a vitamin E compound. The vitamin E compound is used to modify, mask, reduce, cover or eliminate the unpleasant taste impression of a bitter-tasting substance in a fat-containing confectionery composition.

As used herein, a "taste-masking effective amount" is the amount of vitamin E compound that is sufficient to alleviate or reduce the unpleasant taste of the bitter tasting substance as compared to compositions that are prepared without the vitamin E compound. The taste masking effective amount may vary with the degree of the bitter taste being masked, the particular confectionery composition, additional ingredients that may be present in the confectionery composition, the natural genetic variability and individual preferences of various human beings tasting the compositions, and the subjective effect of the vitamin E compound on the taste of the bitter-tasting substance.

In some embodiments, the vitamin E compound is selected from a tocopherol, a tocotrienol, or a combination thereof.

In some embodiments, the vitamin E compound is a tocopherol. Tocopherols are naturally found in vegetable oils, nuts, seeds, and whole grains. Naturally produced forms of the tocopherol as well as synthetic forms can be used. The tocopherols occur in alpha, beta, gamma and delta forms.

In some embodiments, the tocopherol is selected from the group consisting of alpha-tocopherol, beta-tocopherol, gamma-tocopherol, delta-tocopherol, and combinations comprising at least one of the foregoing tocopherols.

In one embodiment, the tocopherol is alpha-tocopherol. Naturally occurring alpha-tocopherol exists in one stereoisomeric form. In contrast, synthetically produced alpha-tocopherol contains equal amounts of its eight possible stereoisomers.

In other embodiments, vitamin E compounds such as tocotrienols can also be used to modify, mask or reduce the unpleasant taste impression of a bitter-tasting substance when administered in the presence of at least one fat. Tocotrienols are naturally found in very low levels in select vegetable oils, palm fruit oil, wheat germ, barley, saw palmetto, and certain types of nuts and grains. Naturally produced forms of the tocotrienol as well as synthetic forms can be used.

Tocotrienols, like tocopherols, are members of the vitamin E family and are structurally similar to tocopherol. The tocotrienols, like the tocopherols, occur in alpha, beta, gamma and delta forms. The tocotrienols also have the same methyl structure at the ring, but differ from tocopherols by the presence of three double bonds in the hydrophobic side chain. The unsaturation in the hydrophobic side chain gives tocotrienols only a single stereoisomeric carbon, whereas tocopherols have 3 chiral centers.

In one embodiment, the tocotrienol is selected from the group consisting of alpha-tocotrienol, beta- tocotrienol gamma- tocotrienol, delta- tocotrienol, and combinations comprising at least one of the foregoing tocotrienols.

The bitter tasting substance can be any substance known to impart a bitter taste.

In some embodiments the bitter tasting substance is menthol. Menthol, also known as 2-(2-propyl)-5-methyl-1-cyclohexanol, is available in artificial form, in naturally derived sources such as peppermint oil, or in a natural form isolated from the peppermint oil. Peppermint oil generally contains about 45-55% menthol, about 20-25% menthone, about 5% menthyl acetate, about 5% eucalyptol and many other constituents.

In some embodiments, the weight ratio of the bitter tasting substance to the tocopherol is about 5:1 to about 1:5, specifically about 3:1 to about 1:3, more specifically about 2:1 to about 1:2 and even more specifically about 1:1 to about 1:1.7. In one embodiment, the weight ratio of the bitter tasting substance to the tocopherol is about 1:1.5.

In some embodiments, the fat is selected from the group consisting of vegetable oil, hydrogenated vegetable oil, partially hydrogenated vegetable oil, triglycerides, diglycerides, monoglycerides, monounsaturated fatty acids, hydrogenated palm oil, palm stearin, palm kernel oil, palm kernel stearin, shea oil, hydrogenated cottonseed oil, cocoa fat, soy bean oil, peanut oil, cotton seed oil, sunflower seed oil, olive oil, illipe oil, almond oil, and combinations comprising at least one of the foregoing fats.

### Confectionery Compositions

The term "confection" or "confectionery" or "confectionery composition" means an edible product comprising a sweet component. Confectionery compositions are well known in the art and generally have been classified as either "hard" or "soft" confectionary items. Confectionery compositions can also include medicinal preparations made with sugar, syrup, or honey, and sweet foods such as candy or pastry.

As used herein, the term "confectionery region" or "confectionery base region" refers to a region of a multi-region confectionery product that may be adjacent to or at least partially surrounding a center-fill, or innermost, region. In some embodiments, the confectionery region is an intermediate region.

As used herein, the term "center-fill" refers to the innermost region of a center-fill confectionery product. In some embodiments, the center-fill region is at least partially surrounded by the confectionery base region. The term "center-fill" does not necessarily imply symmetry of a confectionery product, only that the "center-fill" is within another region of the product. In some embodiments, the center-fill may be substantially symmetric and in others, the center-fill may not be symmetric of the confectionery piece. In some embodiments, more than one center-fill may be present. A center-fill may include solid, liquid, gas and mixtures thereof. The term "liquid" in the context of a center-fill includes fluid materials as well as semi-solid or gel materials. The center-fill can be aqueous, non-aqueous, or an emulsion.

The confectionery composition can be coated or uncoated. As used herein, the term "coating" is used to refer to a region of a material that at least partially surrounds the confectionery core.

In some embodiments, confectionery compositions comprise a bitter tasting substance, at least one fat, and a taste-masking effective amount of a vitamin E compound. In one embodiment the vitamin E compound is a tocopherol. The tocopherol is used to modify, mask, or reduce the unpleasant taste impression of a bitter-tasting substance in a fat-containing confectionery composition.

In other embodiments, a method is provided for masking a bitter taste in a confectionery composition where the method comprises providing a confectionery composition comprising a bitter tasting substance, at least one fat and a taste-masking effective amount of a vitamin E compound. In some embodiments, the vitamin E compound is selected from a tocopherol, a tocotrienol, or a combination thereof.

In some embodiments, the method comprises providing a confectionery composition comprising a bitter tasting substance, at least one fat and a taste-masking effective amount of a tocopherol. In one embodiment, the vitamin E compound is a tocopherol selected from the group consisting of alpha-tocopherol, beta-tocopherol, gamma-tocopherol, delta-tocopherol, and a combination comprising at least one of the foregoing tocopherols.

In some embodiments, the confectionery compositions include, but are not limited to, the group consisting of chocolate, compound coating, carob coating, fondant, fudge, frappe, caramels, nougat, compressed tablet, candy floss, marzipan, chewy candy, hard boiled candy, gummy candy, jelly beans, toffees, taffy, jellies, butterscotch, nut brittles, pastilles, pralines or nougats, flour or starch confectionery, truffles, nonpareils, bon bons, after-dinner mints, fourres, nut pastes, chewing gum, montelimart, nougatine, fruit chews, Turkish delight, hard gummies, soft gummies, starch jellies, gelatinjellies, agar jellies, persipan, coconut paste, coconut ice, lozenges, cachous, crème paste, dragees, sugared nuts, sugared almonds, comfits, aniseed balls, licorice, licorice paste, chocolate spreads, chocolate crumb, and a combinations comprising at least one of the foregoing confectionery compositions.

In some embodiments, the confectionery composition is a chewy candy. Examples of chewy candy include, but are not limited to, the group consisting of caramels, nougat, gummy candy, jelly beans, toffees, taffy, jellies, fruit chews, Turkish delight, hard gummies, soft gummies, starch jellies, gelatin jellies, agar jellies, and a combinations comprising at least one of the foregoing chewy candies.

In one embodiment, the chewy candy comprises a center-filling. The center-filling can be aqueous, non-aqueous or an emulsion. In one embodiment, the center-filling is an emulsion.

In another embodiment the confectionery composition is a hard confectionary such as a lozenge. In another embodiment, the confectionery composition is a chewing gum.

In some embodiments, the tocopherol is present in the confectionery composition in an amount of about 0.0001 to about 10% by weight of the confectionery composition. Specifically, the tocopherol is present in an amount of about 0.0005% to about 5.0%, more specifically about 0.001 to about 1.0%, and even more specifically about 0.01% to about 0.5% by weight of the confectionery composition.

The bitter tasting substance can be any substance known to impart a bitter taste to a confectionery composition.

In some embodiments, the bitter tasting substance is menthol. The menthol can be used in either a liquid or a solid form. In one embodiment, the menthol is present in the confectionery composition as a component of peppermint oil. In other embodiments, the menthol is present as either an artificial form or as a natural form derived from the peppermint oil.

In some embodiments the bitter tasting substance is present in an amount of about 0.0001 to about 10% by weight of the confectionery composition. Specifically, the bitter tasting substance is present in an amount of about 0.0005% to about 5%, more specifically about 0.001 to about 1.0%, and even more specifically about 0.01% to about 0.5% by weight of the confectionery composition.

In some embodiments, the weight ratio of the bitter tasting substance to the tocopherol is about 5:1 to about 1:5, specifically about 3:1 to about 1:3, more specifically about 2:1 to about 1:2 and even more specifically about 1:1 to about 1:1.7. In one embodiment, the weight ratio of the bitter tasting substance to the tocopherol is about 1:1.5.

In some embodiments, the fat is selected from the group consisting of vegetable oil, hydrogenated vegetable oil, partially hydrogenated vegetable oil, triglycerides, diglycerides, monoglycerides, monounsaturated fatty acids, hydrogenated palm oil, palm stearin, palm kernel oil, palm kernel stearin, shea oil, hydrogenated cottonseed oil, cocoa fat, soy bean oil, peanut oil, cotton seed oil, sunflower seed oil, olive oil, illipe oil, almond oil, and a combination comprising at least one of the foregoing fats.

In some embodiments, the fat is present in an amount of about 1% to about 50% by weight based on the weight of the confectionery composition. Specifically, the fat is present in an amount of about 5% to about 45%, and more specifically about 10 to about 30% by weight of the confectionery composition.

In some embodiments, the method of masking a bitter taste in a confectionery composition further comprises mixing the at least one fat, the bitter tasting substance and the tocopherol to form a taste-masked mixture.

An emulsifier can also be included in the taste-masked mixture to form an emulsion. The emulsifier is combined with the fat, the bitter tasting substance and the tocopherol, and the ingredients are mixed together to incorporate the emulsifier into the taste-masked mixture.

The emulsifier is included in amounts of about 0.05% to about 5% by weight based on the weight of the taste masked mixture. Specifically, the emulsifier is present in an amount of about 0.1% to about 3.0%, more specifically about 0.2 to about 2.0%, or even more specifically 0.5% to about 1.5% by weight of the taste-masked mixture.

Examples of emulsifiers include those selected from the group consisting of lecithin derived from soya bean, safflower, or corn, fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerol polyricinoleate (PGPR), lactylated fatty acid esters of glycerol and propylene glycol, polyglycerol esters of fatty acids, citric acid esters of fatty acids, propylene glycol mono- and diesters of fats, fatty acids, and a combination comprising at least one of the foregoing emulsifiers. In some embodiments, the emulsifier comprises polyglycerol polyricinoleate (PGPR) and distilled monoglycerides.

In some embodiments, the taste-masked mixture is an emulsion.

The taste-masked mixture is combined with other individual confectionery ingredients to form the final desired confectionery composition. In some embodiments, the taste-masked mixture is incorporated within the confectionery composition as a center-filling. In other embodiments, the taste-masked mixture may be mixed with other ingredients, and/or distributed homogeneously throughout the confectionery composition. Other ingredients will usually be incorporated into the composition as dictated by the nature of the desired composition as well known to those of ordinary skill in the art. The confectionary composition compositions are readily prepared using methods generally known in the food technology and pharmaceutical arts.

A wide variety of one or more confectionery ingredients or additives can be included in the confectionary composition. Examples of such ingredients include those selected from the group consisting of sweeteners, high intensity sweeteners, flavor modulators or potentiators, flavorants, coloring agents, medicaments, oral care agents, throat care agents, breath fresheners, mineral adjuvants, bulking agents, acidulants, buffering agents, sensates, warming agents, coolants, tingling agents, effervescent agents, thickeners, mouth moisteners, flavor enhancing composition, antioxidants, preservatives, bulking agents, and a combination comprising at least one of the foregoing additives. Some of these additives can serve more than one purpose. For example, a sweetener, e.g., sucrose, sorbitol or other sugar alcohol, or combinations of the foregoing sweeteners, can also function as a bulking agent.

A sweetening agent is included to provide a sweet taste to the confectionary composition. Sweetening agents include sugar sweeteners, sugarless sweeteners, high intensity sweeteners, or a combination of at least one of the foregoing sweetening agents.

Sugar sweeteners generally include saccharides. Examples of sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, high maltose glucose syrup, corn syrup solids, such as high fructose corn syrup, and mixtures thereof.

Examples of sugarless sweetening agents include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysate, and mixtures thereof.

A "high intensity sweetener" as used herein means agents having a sweetness at least 100 times that of sugar (sucrose) on a per weigth basis, specifically at least 500 times that of sugar on a per weigth basis. In one embodiement the high intensity sweetener is at least 1,000 times that of sugar on a per weigth basis, more specifically at least 5,000 times that of sugar on a per weigth basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include: water-soluble sweetening agents such as dihydrochalcones, monellin, steviosides, glycyrrhizin, dihydroflavenol, monatin, and L-aminodicarboxylic acid aminoalkenoic acid ester amides, such as those disclosed in U.S. Pat. No. 4,619,834, or a combination comprising at least one of the foregoing; water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination comprising at least one of the foregoing; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination comprising at least one of the foregoing; water-soluble sweeteners derived from naturally occurring water-soluble sweeteners, such as steviosides, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox γ-beta-D-fructofuranoside, or 4,6,1',6'-tetrachloro4,6,1',6'-tetradeoxygalacto-sucrose; 4,6,1',6'-tetradeoxy-sucrose, or a combination comprising at least one of the foregoing; protein based sweeteners such as thaumaoccous danielli, talin, or a combination comprising at least one of the foregoing; and amino acid based sweeteners.

The high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination comprising at least one of the foregoing forms.

Examples of flavorants that can be used include those artificial or natural flavors known in the art, for example synthetic flavor oils, natural flavoring aromatics and/or oils, oleoresins, extracts derived from plants, leaves, flowers, fruits, and the like, and combinations comprising at least one of the foregoing flavorants. No limiting representative flavors include oils such as spearmint oil, cinnamon oil, oil of wintergreen (methyl calculate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangos teen, pomegranate, papaya, honey lemon, and the like, or a combination comprising at least one of the foregoing flavorants. Specific flavor ants are mints such as peppermint, spearmint, artificial vanilla, cinnamon derivatives, and various fruit flavors.

Other types of flavor ants include various aldehydes and esters such as canary acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavoring agent can be used in liquid or solid form. When used in solid (dry) form, suitable drying means such as spray drying the oil can be used. Alternatively, the flavoring agent can be encapsulated, absorbed onto water soluble materials by means known in the art, for example cellulose, starch, sugar, maltodextrin, gum arabic, and the like. In some embodiments, the flavoring agents can be used in physical forms effective to provide an initial burst of flavor or a prolonged sensation of flavor.

Coolants are additives that provide a cooling or refreshing effect in the mouth, in the nasal cavity, or on skin. Menthyl-based coolants as used herein include menthol and menthol derivatives. Menthol (also known as 2-(2-propyl)-5-methyl-1-cyclohexanol) is available in artificial form, or naturally from sources such as peppermint oil. Menthol derivatives included menthyl ester-based and menthyl carboxamide-based cooling compounds such as menthyl carboxamide, N-ethyl-p-menthane carboxamide, monomenthyl succinate, monomenthyl-alpha, monomenthyl methyl succinate, monomenthyl glutarate, menthyl 2- pyrrolidone-5-carboxylate, monomenthyl 3-methyl maleate, menthyl acetate, menthyl lactate, menthyl salicylate, 2-isopropanyl-5-methylcyclohexanol, 3,1-menthoxypropane 1,2-diol, menthane, menthone, menthone ketals, menthone glycerol ketals, menthyl glutarate esters, N-ethyl-p-menthane-3-carboxamide (WS-3), or a combination comprising at least one of the foregoing.

Other coolants can be used in combination with the menthyl-based coolant, for example 2-mercapto-cyclo-decanone, hydroxycarboxylic acids with 2 to 6 carbon atoms, N-2,3-trimethyl-2-isopropyl butanamide, xylitol, erythritol, alpha-dimethyl succinate, methyl lactate, or a combination comprising at least one of the foregoing.

Warming components can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethyleather, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, and a combination comprising at least one of the foregoing.

Coloring agents (colorants, colorings) can be used in amounts effective to produce a desired color for the comestible. Suitable coloring agents include pigments, which can be incorporated in amounts up to about 6 wt % (weight %) by weight of the comestible. For example, titanium dioxide can be incorporated in amounts up to about 2 wt %, and specifically less than about 1 wt % by weight of the comestible. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene, (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination comprising at least one of the foregoing. In some embodiments, certified colors can include FD&C aluminum lakes, or a combination comprising at least one of the foregoing colors.

In some embodiments, confectionery compositions can be coated with an aqueous coating composition, which can be applied by any method known in the art.

The outer coating can be hard or crunchy. Typically, the outer coating can include sorbitol, maltitol, xylitol, isomalt, and other crystallizable polyols; sucrose can also be used. Flavorants can also be added to yield unique product characteristics.

The coating, if present, can include several opaque layers, such that the confectionery composition is not visible through the coating itself, which can optionally be covered with a further one or more transparent layers for aesthetic, textural and protective purposes. The outer coating can also contain small amounts of water and gum arabic. The coating can be further coated with wax. The coating can be applied in a conventional manner by successive applications of a coating solution, with drying in between each coat. As the coating dries it usually becomes opaque and is usually white, though other colorants can be added. A polyol coating can be further coated with wax. The coating can further include colored flakes or speckles.

The coating can be formulated to assist with increasing the thermal stability of the confectionery composition and preventing leaking of a liquid fill if the product is a center-filled confectionery. In some embodiments, the coating can include a gelatin composition. The gelatin composition can be added as a 40 wt% by weight solution and can be present in the coating composition from about 5 wt% to about 10 wt% by weight of the coating composition, and more specifically about 7 wt % to about 8wt %. The gel strength of the gelatin can be from about 130 bloom to about 250 bloom.

The foregoing and other embodiments are further illustrated by the following examples, which are not intended to limit the effective scope of the claims. All parts and percentages in the examples and throughout the specification and claims are by weight of the final composition unless otherwise specified.

### EXAMPLES

### Example 1. Effect of Tocopherol on Emulsion-filled Panned Chewy Candy Products

The following example was prepared to demonstrate the effects of tocopherol on the overall flavor profile of panned chewy candy products having an emulsion-based center-filling.

Panned Chewy Products were prepared having an emulsion filling. The emulsion fillings were prepared according to the formulations indicated in Tables 1 and 2. Two fats were chosen for their textural qualities. Specifically, the emulsions contained either a low melting point fat (refined palm oil; Table 1), or a high melting point fat (palm stearin; Table 2). The Refined Palm Oil (Palmotex™; AAK) is a "soft" fat having a slip melting point of 36°C. The Palm Stearin (Palmotex™ 98T; AAK) is a "hard" fat having a slip melting point of 50°C.

**Table 1. Emulsions containing Refined Palm Oil**

| | Comparative Example 1 (CE 1) | | Example 1 (Ex. 1) | |
|---|---|---|---|---|
| Ingredient | % | Kg | % | Kg |
| Refined Palm Oil (low melting fat) | 20.0 | 3.000 | 20.0 | 3.000 |
| Polyglucerol ricinoleate (PGPR 4150, Palsgaard) | 0.825 | 0.1238 | 0.825 | 0.1238 |
| Distilled monoglycerides (DMG 0298, Palsgaard) | 0.825 | 0.1238 | 0.825 | 0.1238 |
| High maltose glucose syrup DE 45 (Lille) | 77.33 | 11.5995 | 77.33 | 11.595 |
| Spearmint Flavor, Base Spearmint (Givaudan) | 1.0 | 0.15 | 1.0 | 0.15 |
| Menthol | 0.02 | 0.003 | 0.02 | 0.003 |
| Alpha-Tocopherol (Lycored) | - | - | 0.03 | 0.0045 |
| Total | 100 | 15.000 | 100 | 15.000 |

**Table 2. Emulsions containing Palm Stearin**

| | Comparative Example 1 (CE 1) | | Example 1 (Ex. 1) | |
|---|---|---|---|---|
| Ingredient | % | Kg | % | Kg |
| Palm Stearin (high melting fat) | 20.0 | 3.000 | 20.0 | 3.000 |
| PGPR 4150 (Palsgaard) | 0.825 | 0.1238 | 0.825 | 0.1238 |
| Distilled monoglycerides (DMG 0298, Palsgaard) | 0.825 | 0.1238 | 0.825 | 0.1238 |
| High maltose glucose syrup DE 45 (Lille) | 77.33 | 11.5995 | 77.33 | 11.595 |
| Spearmint Flavor | 1.0 | 0.15 | 1.0 | 0.15 |
| Menthol | 0.02 | 0.003 | 0.02 | 0.003 |
| Alpha-Tocopherol (Lycored) | - | - | 0.03 | 0.0045 |
| Total | 100 | 15.000 | 100 | 15.000 |

The fats, emulsifiers and tocopherol were mixed and heated to 70°C to melt and dissolve the emulsifiers into the fats. The flavors were then added. The fat mixture was placed into a Hobart mixer and the glucose syrup (preheated to 40°C) was added slowly with mixing (over about 60 seconds).

The soft fat formulations (Table 1) were mixed and cooled to 33°C, while the hard fat recipes (Table 2) were mixed and cooled to 42°C. The Hobart was not jacketed so although initially ambient cooling was used it was necessary to incorporate the use of freeze spray, cold packs and trays of iced water to aid in the cooling of the emulsions. The emulsions were made in 15 kg batches.

The finished emulsions were transferred to a hopper above a progressive cavity type pump (e.g. monopump). The hopper and pipework to the process and the recirculation loop were jacketed at 40°C and controlled.

The emulsion was pumped into a co-extrusion arrangement to make a rope of toffee having an emulsion center fill. This rope was cooled, stretched, collected, roller-resized, rotary formed, cooled and collected for panning. The formed center-filled chews were pre-coated with a maltitol solution. A hard coating was then applied on the surface of the formed centers using a maltitol solution and panning processes.

The emulsions were tasted during the process of production in order to test for the presence of rancidity. Comments regarding the taste evaluations of the emulsion are shown below in Table 3. The fats were also tasted prior to use and no off flavors were detected. The center-filled chewy products were tasted prior to panning and no rancid or off-notes were detected.

**Table 3. Taste Evaluation of the Emulsions**

| Sample | Description | Comments |
|---|---|---|
| CE1 | Palm Oil | Minty, bitter, lingering bitter aftertaste, not rancid |
| Ex. 1 | Palm Oil + Tocopherol | Minty, bitter, sweeter than CE 1, not rancid |
| CE2 | Palm Stearin | Minty, bitter, thick mouth feel, not rancid |
| Ex. 2 | Palm Stearin + Tocopherol | Minty, bitter, sweeter than CE2, waxy, more mouth coating that CE2 |

Following taste testing of the emulsions, it was apparent that the tocopherol decreases the bitterness and enhances the sweetness of both the high melting fat emulsion and the low melting fat emulsion.

After one week, the final panned, chewy products were subjected to a tasting evaluation. The results of the taste evaluation for the final products are shown in Table 4.

**Table 4. Taste Evaluation of the Panned, Chewy Candy Products**

| Sample | Description | Comments |
|---|---|---|
| CE1 | Palm Oil | Oily, minty, bitter Filling "squirts" out of the center when you bite into sample No off notes/ rancidity |
| Ex. 1 | Palm Oil + Tocopherol | Sweeter than CE1, less bitter and less oily Slightly caramelized flavor No off notes/ rancidity |
| CE2 | Palm Stearin | Minty, bitter No off notes/ rancidity |
| Ex. 2 | Palm Stearin + Tocopherol | Sweeter than CE2 |

Following taste testing of the final panned, chewy products, it was apparent that products prepared including the emulsions including the DL-alpha-tocopherol were sweeter and generally less bitter as compared to emulsions that did not include DL-alpha-tocopherol. The chewy products containing the emulsion having the high melting point fat emulsion center were preferred over those having the low melting point fat emulsion center.

### Example 2. Effects of Tocopherol on Menthol Bitterness

### Preparation of Water-based Menthol Solutions

The following example was prepared to demonstrate the effects of tocopherol on the bitterness of compositions containing menthol.

Solutions containing menthol with and without DL-alpha-tocopherol were prepared using water as the primary diluent. Since menthol is insoluble in water, the menthol was first dissolved in food grade alcohol and then diluted in water.

Tasting solutions prepared using water as a diluent are shown below in Table 5. To prepare the water-based solutions, menthol was first added to the food grade alcohol and stirred for a period of 30 minutes. The DL-alpha-tocopherol is then added and the mixture is stirred for an additional 30 minutes. The solution was transferred to a 500 ml volumetric flask, the flask was then filled to the line with water and inverted several times to facilitate mixing of the ingredients in the flask.

**Table 5. Water-based Menthol Formulations**

| | Comparative Example 3 (CE3) | | Example 3 (Ex. 3) | |
|---|---|---|---|---|
| Ingredient | % | g | % | g |
| Food grade alcohol | 20.00 | 100 | 20.00 | 100 |
| Menthol | 0.02 | 0.1 | 0.02 | 0.1 |
| DL-alpha-tocopherol | - | - | 0.03 | 0.15 |
| Water | 79.98 | 399.90 | 79.95 | 399.75 |
| Total | 100 | 500.00 | 100 | 500.00 |

### Taste Testing of Water-based Menthol Solutions

Taste tests were performed to determine whether there were any detectable taste differences between water-based solutions containing both menthol and dl-alpha-tocopherol and those containing menthol alone.

Triangle tests were used to detect taste differences between samples. Panelists were presented with three samples, all coded with random, 3-digit codes. The three samples were selected from either two samples of CE3 and one sample of Ex. 3; or one sample of CE3 and two samples or Ex. 3. The three samples were presented in a random order to as not to bias the results. Panelists were asked to taste the three samples and identify the "odd" sample. The panelists were also asked to articulate the reason for their selection.

The results for the three-triangle test of the water-based menthol solutions (CE3 and Ex. 3) are shown below in Table 6.

**Table 6. Results of Triangle Test for Water-Based Menthol Solutions**

| Panelist | Correct Difference Detected | Comment ** |
|---|---|---|
| 1 | No | |
| 2 | No | |
| 3 | No | |
| 4 | No | 312 seemed to be very bitter compared to the other two |
| 5 | Yes | More bitter and more menthol flavor |
| 6 | Yes | |
| 7 | No | |
| 8 | No | |
| 9 | Yes | 312 was more cooling and bitter |
| 10 | No | |
| 11 | No | |
| 12 | Yes | 188 was more bitter. 250 and 312 has a more intense alcohol flavor |
| 13 | No | |
| 14 | No | |
| 15 | Yes | 188 tasted slightly less of cough medicine and more menthol |
| 16 | No | |
| 17 | No | |
| 18 | Yes | 250 and 312 have a bitterness to them whereas 188 didn't, it was possible sweeter |
| 19 | No | |
| 20 | Yes | Tastes less strong and impactful, cooling lasted longer |

| | | |
|---|---|---|
| **Code Breaker: CE3: Sample 105 and Sample 188 Ex. 3: Sample 312 and Sample 250 | | |

As shown in Table 6, of the 20 panelists tested, 7 were able to correctly identify the odd sample, showing that there is no significant difference in taste between the sample containing menthol and tocopherol and the sample containing menthol alone. Of the seven that correctly identified the odd sample, only three panelists suggested that the tocopherol masks the bitterness of the menthol present in the sample.

It was decided that water was not the best medium (diluent) for testing the effect of tocopherol on the taste of the menthol solution. It is believed that since tocopherol is a fat-soluble vitamin, that dispersion of the tocopherol in the water-based solution was possible not homogenous enough.

### Preparation of Milk-based Menthol Solutions

In order to improve the dispersion of the tocopherol in the menthol solution, full fat milk was used as the primary diluent to prepare the solutions. In addition, a lower amount of food grade alcohol was used to dissolve the menthol.

Tasting solutions prepared using water as a full fat milk are shown below in Table 7. To prepare the milk-based solutions, menthol was first added to food grade alcohol in a volumetric flask and stirred for a period of 30 minutes. The DL-alpha-tocopherol was then dissolved in 250 ml of milk by stirring for a period of 30 minutes. The milk solution (or milk alone) and menthol solution were transferred to a 500 ml volumetric flask, the flask was then filled to the line with water and inverted several times to facilitate mixing of the ingredients in the flask.

**Table 7. Milk-based Menthol Formulations**

| | Comparative Example 4 (CE4) | | Example 4 (Ex. 4) | |
|---|---|---|---|---|
| Ingredient | % | g | % | g |
| Food grade alcohol | 5.00 | 25.00 | 5.00 | 25.00 |
| Menthol | 0.02 | 0.10 | 0.02 | 0.10 |
| DL-alpha-tocopherol | - | - | 0.03 | 0.15 |
| Milk | 94.98 | 474.90 | 94.95 | 474.75 |
| Total | 100 | 500.00 | 100 | 500.00 |

### Taste Testing of Milk-based Menthol Solutions

Taste tests were performed to determine whether there were any detectable taste differences between milk-based solutions containing both menthol and dl-alpha-tocopherol and those containing menthol alone. Triangle tests were used to detect taste differences between samples. Panelists were presented with three samples, all coded with random, 3-digit codes. The three samples were selected from the following groupings: (1) two samples of CE4 and one sample of Ex. 4; or (2) one sample of CE4 and two samples or Ex. 4. The three samples were presented in a random order to as not to bias the results. Panelists were asked to taste the three samples and identify the "odd" sample. The panelists were also asked to articulate the reason for their selection.

The results for the three-triangle test of the milk-based menthol solutions (CE3 and Ex. 3) are shown below in Table 8.

**Table 8. Results of Triangle Test for Milk-Based Menthol Solutions**

| Panelist | Correct Difference Detected | Comment ** |
|---|---|---|
| 1 | No | |
| 2 | Yes | 176 tasted a little stronger overall |
| 3 | Yes | 176 seemed more concentrated in alcohol than 382 and 554 |
| 4 | Yes | 176 tasted different - slightly sweeter perhaps? Flavor was also not as strong |
| 5 | Yes | The amount of alcohol added was different. Sample 176 also left a slightly bitter aftertaste |
| 6 | No | |
| 7 | No | |
| 8 | Yes | 905 tastes like off milk followed by a slight mint flavor. 382 and 554 tasted more like normal milk but with a stronger mint flavor |
| 9 | Yes | 905 was a stronger sample, alcohol taste was stronger, milk didn't mask it as well |
| 10 | Yes | 905 had less cooling and menthol than 554 and 382; slower onset but similar bitterness level |
| 11 | No | |
| 12 | No | |
| 13 | No | |
| 14 | No | |
| 15 | Yes | More bitter |
| 16 | Yes | 176 and 905 were sweeter and had a more intensified alcohol flavor, also had less lingering bitterness than 382 |
| 17 | No | |
| 18 | No | |
| 19 | Yes | 382 was stronger |
| 20 | No | |

| | | |
|---|---|---|
| **Code Breaker: CE4: Sample 554 and Sample 382 Ex. 4: Sample 176 and Sample 905 | | |

As shown in Table 8, of the 20 panelists tested, ten were able to correctly identify the odd sample. The p value for this result is 0.092, showing that there is a trend difference in taste profiles between the sample containing both menthol and tocopherol (Ex. 4) and the sample containing menthol alone (CE4). The results also show that tocopherol had an impact on reducing the bitterness of menthol in full fat milk.

As used herein the transitional term "comprising," (also "comprises," etc.) which is synonymous with "having", "including," "containing," or "characterized by," is inclusive or open-ended and does not exclude additional, unrecited elements or method steps, regardless of its use in the preamble or the body of a claim.

The singular forms "a," "an," and "the" include plural referents unless the context clearly dictates otherwise.

The endpoints of all ranges directed to the same characteristic or component are independently combinable, and inclusive of the recited endpoint.

The word "or" means "and/or."

Providing can be accomplished by a manufacturer, distributor, or other seller that makes the product available to the consumer.

Reference throughout the specification to "one embodiment", "other embodiments", "an embodiment", and so forth, means that a particular element (e.g., feature, structure, and/or characteristic) described in connection with the embodiment is included in at least one embodiment described herein, and can or can not be present in other embodiments. In addition, it is to be understood that the described elements can be combined in any suitable manner in the various embodiments.

While the invention has been described with reference to an exemplary embodiment(s), it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment(s) disclosed as the best mode contemplated for carrying out this invention, but that the invention will include all embodiments falling within the scope of the appended claims.

## Claims

1. A method of masking the unpleasant taste of a bitter tasting substance, the method comprising administering the bitter tasting substance with a tocopherol in the presence of at least one fat.

2. The method of claim 1, the method comprising:
providing a confectionery composition comprising a bitter tasting substance, at least one fat and a taste-masking effective amount of a tocopherol.

3. The method of claim 1 or claim 2, wherein the tocopherol is selected from the group consisting of alpha-tocopherol, beta-tocopherol, gamma-tocopherol, delta-tocopherol, and a combination comprising at least one of the foregoing tocopherols.

4. The method of any one of claims 1-3, wherein the tocopherol is present in an amount of 0.0001 to 10% by weight of the confectionery composition.

5. The method of any one of claims 2-4, wherein the tocopherol is present in an amount of 0.001 to 1.0 % by weight of the confectionery composition.

6. The method of any one of claims 2-5, wherein the bitter tasting substance is present in an amount of 0.0001 to 10% by weight of the confectionery composition.

7. The method of any one of claims 1-6, wherein the bitter tasting substance is menthol.

8. The method of any one of claims 1-7, wherein the fat is selected from the group consisting of vegetable oil, hydrogenated vegetable oil, partially hydrogenated vegetable oil, a triglyceride, a diglyceride, a monoglyceride, a monounsaturated fatty acid, hydrogenated palm oil, palm stearin, palm kernel oil, palm kernel stearin, shea oil, hydrogenated cottonseed oil, cocoa fat, soy bean oil, peanut oil, cotton seed oil, sunflower seed oil, olive oil, illipe oil, almond oil, and a combination comprising at least one of the foregoing fats.

9. The method of any one of claims 2-8, wherein the fat is present in an amount of 5% to 45% by weight based on the weight of the confectionery composition.

10. The method of any one of claims 2-9, wherein the confectionery composition is selected from the group consisting of chocolate, compound coating, carob coating, fondant, fudge, frappe, a caramel, nougat, compressed tablet, candy floss, marzipan, chewy candy, hard boiled candy, gummy candy, jelly beans, a toffees, taffy, jellies, butterscotch, nut brittle, a pastille, a praline or nougat, flour or starch confectionery, a truffle, a nonpareil, a bon bon, an after-dinner mints, fourres, nut paste, chewing gum, montelimart, nougatine, a fruit chew, Turkish delight, hard gummies, soft gummies, starch jellies, gelatin jellies, agar jellies, persipan, coconut paste, coconut ice, lozenges, cachous, crème paste, dragees, sugared nuts, sugared almonds, a comfit, an aniseed ball, licorice, licorice paste, chocolate spread, chocolate crumb, and a combination comprising at least one of the foregoing confectionery compositions.

11. The method of any one of claims 1-10, wherein the method comprises mixing the fat, the bitter tasting substance, and the tocopherol to form a taste-masked mixture.

12. The method of any one of claims 2-11, further comprising mixing an emulsifier with the fat, the bitter tasting substance, and the tocopherol.

13. The method of any one of claims 2-12, wherein the emulsifier is selected from the group consisting of lecithin; a fractionated lecithin enriched with either phosphatidyl choline, phosphatidyl ethanolamine, or phosphatidyl inositol; an emulsifier derived from oats; a monoglyceride and a diglyceride and their tartaric esters; monosodium phosphate derivatives of monoglycerides and diglycerides of edible fats and oils; sorbitan monostearate; polyoxyethylene sorbitan monostearate; hydroxylated lecithin; a synthetic phospholipid such as ammonium phosphatides; polyglycerol polyricinoleate (PGPR); a lactylated fatty acid ester of glycerol or propylene glycol; a polyglycerol ester of a fatty acid; a citric acid ester of a fatty acid; a propylene glycol monoester and diester of a fat; a fatty acid; and a combination comprising at least one of the foregoing emulsifiers.

14. The method of any one of claims 1-13, wherein the weight ratio of the bitter tasting substance to the tocopherol is 5:1 to 1:5.

15. Use of tocopherol to modify, mask or reduce the unpleasant taste impression of a bitter-tasting substance in a fat-containing confectionery composition.

## Patentansprüche

1. Verfahren zur Maskierung des unangenehmen Geschmacks einer bitter schmeckenden Substanz, enthaltend das Verabreichen der bitter schmeckenden Substanz zusammen mit einem Tocopherol in Gegenwart von mindestens einem Fett.

2. Verfahren nach Anspruch 1, wobei das Verfahren weiter enthält:
Bereitstellen einer Süßwarenzusammensetzung, die eine bitter schmeckende Substanz, mindestens ein Fett und eine zur Geschmacksmaskierung wirksame Menge eines Tocopherols enthält.

3. Verfahren nach Anspruch 1 oder Anspruch 2, wobei das Tocopherol ausgewählt ist aus der Gruppe bestehend aus alpha-Tocopherol, beta-Tocopherol, gamma-Tocopherol, delta-Tocopherol und einer Kombination, die mindestens eines der genannten Tocopherole enthält.

4. Verfahren nach einem der Ansprüche 1 bis 3, wobei das Tocopherol in einer Menge von 0,0001 bis 10 Gewichts-% der Süßwarenzusammensetzung vorhanden ist.

5. Verfahren nach einem der Ansprüche 2 bis 4, wobei das Tocopherol in einer Menge von 0,001 bis 1,0 Gewichts-% der Süßwarenzusammensetzung vorhanden ist.

6. Verfahren nach einem der Ansprüche 2 bis 5, wobei die bitter schmeckende Substanz in einer Menge von 0,0001 bis 10 Gewichts-% der Süßwarenzusammensetzung vorhanden ist.

7. Verfahren nach einem der Ansprüche 1 bis 6, wobei die bitter schmeckende Substanz Menthol ist.

8. Verfahren nach einem der Ansprüche 1 bis 7, wobei das Fett ausgewählt ist aus der Gruppe bestehend aus Pflanzenöl, gehärtetem Pflanzenöl, teilweise gehärtetem Pflanzenöl, einem Triglycerid, einem Diglycerid, einem Monoglycerid, einer einfach ungesättigten Fettsäure, gehärtetem Palmöl, Palmstearin, Palmkernöl, Palmkernstearin, Shea-Öl, gehärtetem Baumwollsaatöl, Kakaofett, Sojabohnenöl, Erdnussöl, Baumwollsaatöl, Sonnenblumenöl, Olivenöl, Illipe-Öl, Mandelöl und einer Kombination, die mindestens eines der genannten Fette enthält.

9. Verfahren nach einem der Ansprüche 2 bis 8, wobei das Fett in einer Menge von 5 bis 45 Gewichts-%, basierend auf dem Gewicht der Süßwarenzusammensetzung, vorhanden ist.

10. Verfahren nach einem der Ansprüche 2 bis 9, wobei die Süßwarenzusammensetzung ausgewählt ist aus der Gruppe bestehend aus Schokolade, Fettglasur, Johannisbrotbeschichtung, Fondant, Fudge, Frappe, einem Karamell, Nougat, komprimierten Tabletten, Zuckerwatte, Marzipan, Kaubonbons, Hartkaramellen, gummiartigen Bonbons, Geleebohnen, einem Toffee, Taffy, Gelees, Butterscotch, Nusskrokant, einer Pastille, einer Praline oder Nougat, Mehl- oder Stärkesüßwaren, einem Trüffel, einem Nonpareille, einem Bonbon, einem "after dinner"-Pfefferminz, gefüllten Bonbons, Nusspaste, Kaugummi, Montelimarnougat, Nougatine, einem Fruchtkaubonbon, Turkish Delight, harten Fruchtgummis, weichen Fruchtgummis, Stärkegelees, Gelatinegelees, Agargelees, Persipan, Kokospaste, Kokoseis, Lutschtabletten, Cachous, Cremepaste, Dragees, gezuckerten Nüssen, gezuckerten Mandeln, einem Comfit, einer Aniskugel, Lakritz, Lakritzpaste, Schokoladenaufstrich, Schokoladen-Crumb und einer Kombination, die mindestens eine der genannten Süßwarenzusammensetzungen enthält.

11. Verfahren nach einem der Ansprüche 1 bis 10, wobei das Verfahren das Vermischen des Fetts, der bitter schmeckenden Substanz und des Tocopherols enthält, um eine geschmacksmaskierte Mischung zu bilden.

12. Verfahren nach einem der Ansprüche 2 bis 11, weiter enthaltend das Vermischen eines Emulgators mit dem Fett, der bitter schmeckenden Substanz und dem Tocopherol.

13. Verfahren nach einem der Ansprüche 2 bis 12, wobei der Emulgator ausgewählt ist aus der Gruppe bestehend aus Lecithin; einem fraktionierten Lecithin, das entweder mit Phosphatidylcholin, Phosphatidylethanolamin oder Phosphatidylinositol angereichert ist; einem Emulgator, der aus Hafer abgeleitet ist; einem Monoglycerid und einem Diglycerid und deren Weinsäureestern; Mononatrium-Phosphatderivaten von Monoglyceriden und Diglyceriden von essbaren Fetten und Ölen; Sorbitanmonostearat; Polyoxyethylensorbitanmonostearat; hydroxyliertem Lecithin; einem synthetischen Phospholipid wie zum Beispiel Ammoniumphosphatiden; Polyglycerinpolyricinoleat (PGPR); einem lactylierten Fettsäureester von Glycerin oder Propylenglykol; einem Polyglycerinester einer Fettsäure; einem Zitronensäureester einer Fettsäure; einem Propylenglykolmonoester und Diester eines Fettes; einer Fettsäure; und einer Kombination, die mindestens einen der genannten Emulgatoren enthält.

14. Verfahren nach einem der Ansprüche 1 bis 13, wobei das Gewichtsverhältnis der bitter schmeckenden Substanz zu dem Tocopherol 5:1 bis 1:5 beträgt.

15. Verwendung von Tocopherol zum Modifizieren, Maskieren oder Reduzieren des unangenehmen Geschmackseindrucks einer bitter schmeckenden Substanz in einer fetthaltigen Süßwarenzusammensetzung.

## Revendications

1. Procédé pour masquer le goût déplaisant d'une substance ayant un goût amer, le procédé comprenant le fait d'administrer la substance ayant un goût amer avec un tocophérol en la présence d'au moins une matière grasse.

2. Procédé suivant la revendication 1, le procédé comprenant :
on fournit une composition de confiserie comportant une substance ayant un goût amer, au moins un matière grasse et une quantité efficace pour masquer le goût d'un tocophérol.

3. Procédé suivant la revendication 1 ou la revendication 2, dans lequel le tocophérol est sélectionné dans le groupe constitué d'un alpha-tocophérol, d'un bêta-tocophérol, d'un gamma-tocophérol, d'un delta-tocophérol et d'une combinaison comportant au moins l'un des tocophérols précédents.

4. Procédé suivant l'une quelconque des revendications 1 à 3, dans lequel le tocophérol est présent en une quantité comprise entre 0,0001 et 10% en poids de la composition de confiserie.

5. Procédé suivant l'une quelconque des revendications 2 à 4, dans lequel le tocophérol est présent en une quantité comprise entre 0,001 et 1,0% en poids de la composition de confiserie.

6. Procédé suivant l'une quelconque des revendications 2 à 5, dans lequel la substance ayant un goût amer est présente en une quantité comprise entre 0,0001 et 10% en poids de la composition de confiserie.

7. Procédé suivant l'une quelconque des revendications 1 à 6, dans lequel la substance ayant un goût amer est le menthol.

8. Procédé suivant l'une quelconque des revendications 1 à 7, dans lequel la matière grasse est sélectionnée dans le groupe constitué d'une huile végétale, d'une huile végétale hydrogénée, d'une huile végétale partiellement hydrogénée, d'un triglycéride, d'un diglycéride, d'un monoglycéride, d'un acide gras monoinsaturé, de l'huile de palme hydrogénée, de la stéarine de palme, de l'huile de noyau de palme, de la stéarine de noyau de palme, de l'huile de karité, de l'huile de plant de coton hydrogénée, d'une matière grasse à base de coco, de l'huile de soja, de l'huile de cacahuète, de l'huile de plant de coton, de l'huile de plant de tournesol, de l'huile d'olive, de l'huile d'illipé, de l'huile d'amande et d'une combinaison comportant au moins l'une des matières grasses précédentes.

9. Procédé suivant l'une quelconque des revendications 2 à 8, dans lequel la matière grasse est présente en une quantité de 5% à 45% en poids sur la base du poids de la composition de confiserie.

10. Procédé suivant l'une quelconque des revendications 2 à 9, dans lequel la composition de confiserie est sélectionnée dans le groupe constitué d'un chocolat, d'un enrobage composite, d'un enrobage de caroube, d'un fondant, d'un fudge, d'un frappé, d'un caramel, d'un nougat, d'un comprimé, d'une barbe-à-papa, d'un massepain, d'un bonbon mou, d'un bonbon dur cuit, d'un bonbon gélifié, d'une dragée, d'un caramel au beurre, d'un bonbon fondant, d'un bonbon à la gelée, d'un caramel dur, d'une nougatine à base de noix, d'une pastille, d'un praliné ou d'un nougat, d'une confiserie à base de farine ou d'amidon, d'une truffe, d'un nonpareil, d'un bonbon à base de menthe pour l'après-dîner, d'un fourré, d'une pâte de noix, d'un chewing-gum, d'un montélimart, d'une nougatine, d'une gomme à base de fruit, d'un délice turque, d'une gomme dure, d'une gomme molle, d'un amidon gelé, d'une gelée à base de gélatine, d'une gelée à base d'agar, d'un persipan, d'une pâte de noix de coco, d'une noix de coco glacée, d'un losange, d'un cachou, d'une pâte de crème, d'une dragée, de noix sucrées, d'amandes sucrées, d'un confit, d'une boule anisée, d'un réglisse, d'une pâte de réglisse, d'un chocolat à tartiner, d'un miel de chocolat et d'une combinaison comportant au moins l'une des compositions de confiserie précédentes.

11. Procédé suivant l'une quelconque des revendications 1 à 10, dans lequel le procédé comprend le fait de mélanger la matière grasse, la substance ayant un goût amer et le tocophérol pour former un mélange qui masque le goût.

12. Procédé suivant l'une quelconque des revendications 2 à 11, comprenant, en outre, le fait de mélanger un émulsifiant avec la matière grasse, la substance ayant un goût amer et le tocophérol.

13. Procédé suivant l'une quelconque des revendications 2 à 12, dans lequel l'émulsionnant est sélectionné dans le groupe constitué de la lécithine ; d'une lécithine fractionnée enrichie avec soit une choline phosphatidyle, un éthanolamine phosphatidyle, ou un inositol phosphatidyle ; d'un émulsionnant dérivé de l'avoine ; d'un monoglycéride et d'un diglycéride et leurs esters tartriques ; des dérivés du phosphate monosodique de monoglycérides et de diglycérides de matières grasses et d'huiles comestibles ; de monostéarate de sorbitol ; de monostérate de polyoxyéthylène sorbitol ; de lécithine hydroxylée ; d'un phospholipide synthétique tel qu'un phosphatide d'ammonium ; d'un polyricinoléate de polyglycérol (PGPR) ; d'un ester d'acide gras lactylé de glycérol ou de propylène glycol ; d'un ester polyglycérolique d'un acide gras ; d'un ester d'acide citrique d'un acide gras ; d'un monoester et diester de propylène glycol d'une matière grasse ; d'un acide gras ; et d'une combinaison comprenant au moins l'un des émulsionnants précédents.

14. Procédé suivant l'une quelconque des revendications 1 à 13, dans lequel le rapport de poids de la substance ayant un goût amer au tocophérol est compris entre 5:1 et 1:5.

15. Utilisation du tocophérol pour modifier, masquer ou diminuer l'impression de goût déplaisant d'une substance ayant un goût amer dans une composition de confiserie contenant une matière grasse.
